## Europäisches Patentamt
## European Patent Office
## Office européen des brevets

(19)

(11) Numéro de publication : **0 153 211**
**B1**

(12)

# FASCICULE DE BREVET EUROPÉEN

(45) Date de publication du fascicule du brevet :
08.07.87

(51) Int. Cl.⁴ : **B 25 J 15/10**

(21) Numéro de dépôt : **85400130.2**

(22) Date de dépôt : **28.01.85**

---

(54) **Pince à parallélogrammes articulés.**

---

(30) Priorité : **07.02.84 FR 8402116**

(43) Date de publication de la demande :
**28.08.85 Bulletin 85/35**

(45) Mention de la délivrance du brevet :
**08.07.87 Bulletin 87/28**

(84) Etats contractants désignés :
**DE GB IT**

(56) Documents cités :
**US-A- 3 033 605**
**US-A- 3 051 327**
**US-A- 3 144 947**

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Van Oost, Daniel Michel**
**11, rue des Vieux Gagnons**
**F-91460 Marcoussis (FR)**

(74) Mandataire : **Boivin, Claude**
**9, rue Edouard-Charton**
**F-78000 Versailles (FR)**

---

**Description**

La présente invention a pour objet une pince adaptable sur un robot et propre à saisir des pièces circulaires ou comportant un alésage circulaire.

Le brevet US 3 051 327 décrit une pince de ce genre comportant un support, des parallélogrammes articulés qui sont disposés dans des plans convergeant vers un axe et dont un premier bras est mobile par rapport au support parallèlement à cet axe, le bras opposé étant mobile dans une direction perpendiculaire audit axe, mais fixe dans la direction de ce dernier, et portant un doigt de serrage, et des moyens portés par le support pour déplacer les premiers bras du parallélogramme.

Lorsque les premiers bras des parallélogrammes sont déplacés par rapport au support, les bras opposés se déplacent avec leur doigt de serrage en se rapprochant ou en s'éloignant de l'axe de convergence des parallélogrammes. Dans le premier cas, les doigts peuvent venir serrer une pièce à transporter disposée dans cet axe. Dans le second cas, les doigts peuvent saisir une pièce comportant un alésage circulaire, en étant engagés dans cet alésage.

La présente invention a pour objet une pince de ce type dont le fonctionnement est particulièrement précis et sûr.

La pince selon l'invention est caractérisée en ce que les bras des parallélogrammes portant les doigts de serrage sont munis d'au moins deux galets disposés de part et d'autre du support, au contact de pistes prévues sur celui-ci.

La pince selon l'invention est particulièrement utilisable pour le transport de pièces légères et fragiles, telles que celles qui sont employées dans la fabrication de moteurs électriques. Lorsque l'axe de convergence des parallélogrammes est vertical et que, de ce fait, les doigts de serrage se déplacent horizontalement, il est facile d'exercer un effort de serrage suffisant pour que la pièce ne glisse pas verticalement sous l'effet de son poids, sans être excessif pour ne pas la déformer.

En faisant subir un mouvement de translation et de rotation au support à l'aide du robot, la pièce saisie est déplacée et orientée ; elle peut être déposée avec précision sur un banc de montage.

Dans un mode de réalisation particulier de l'invention, les premiers bras des parallélogrammes et les bras opposés portant les doigts de serrage sont engagés dans des fentes du support orientées vers l'axe de convergence des parallélogrammes.

Les premiers bras des parallélogrammes peuvent être solidaires d'un même embout de commande relié au support par un vérin disposé dans l'axe de convergence des parallélogrammes.

Les extrémités des bras des parallélogrammes portant les doigts de serrage sont avantageusement taillés en biseau de façon à pouvoir se rejoindre sur l'axe de convergence des parallélogrammes. L'angle du biseau est fonction du nombre des parallélogrammes ; par exemple, dans le cas de trois parallélogrammes, il est de 120°.

On a décrit ci-après, à titre d'exemple non limitatif, un mode de réalisation de la pince selon l'invention avec référence au dessin annexé dans lequel :

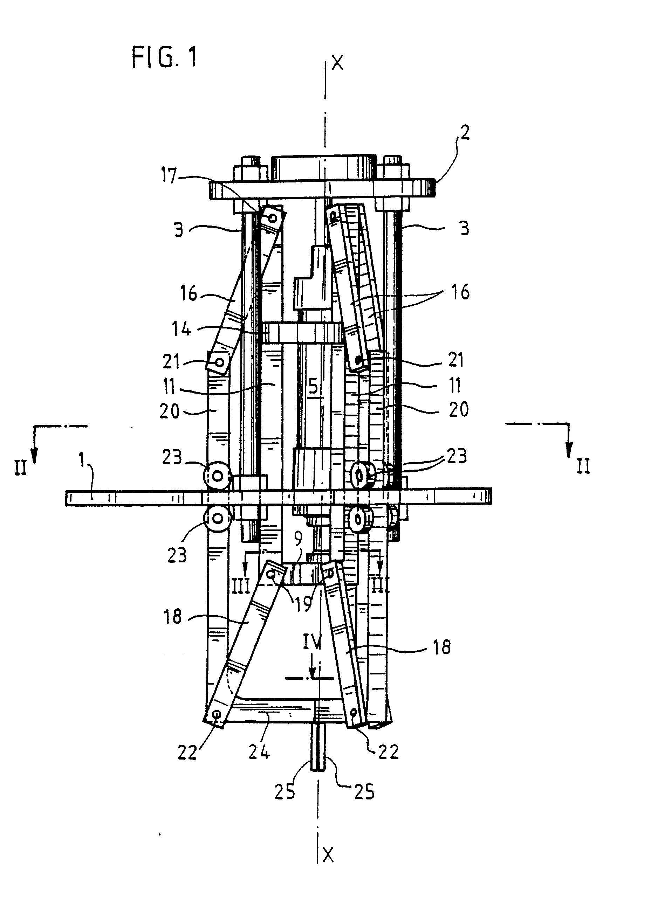

La Figure 1 est une vue en élévation de la pince ;

Les Figures 2 à 4 en sont des vues en coupe horizontales respectivement suivant II-II, III-III et IV-IV de la Figure 1 ;

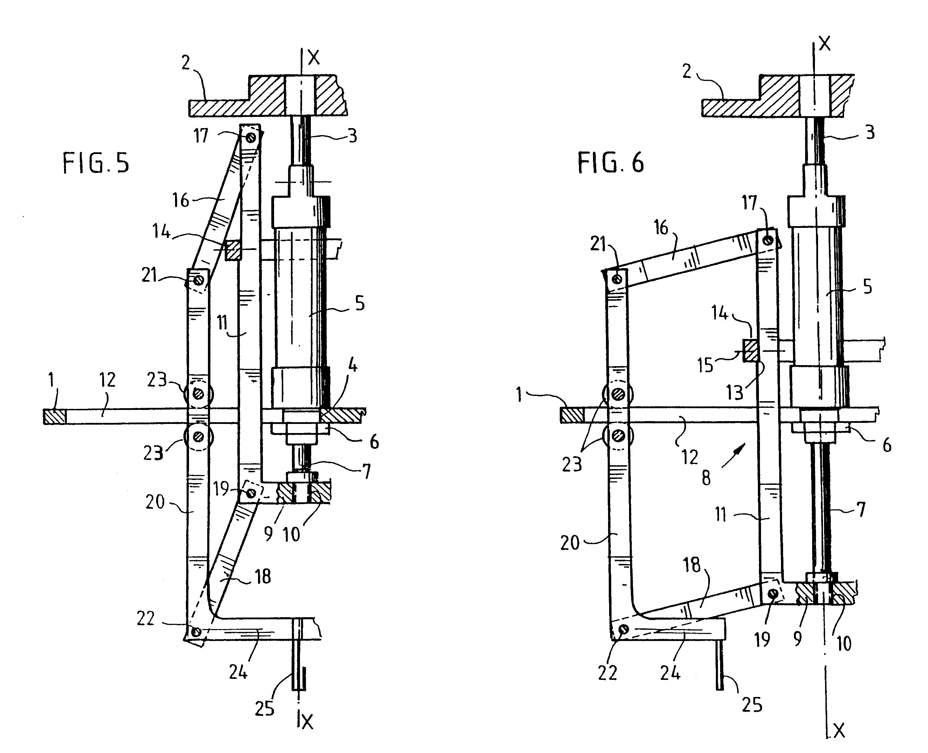

La Figure 5 en est une coupe verticale suivant V-V de la Figure 2 ;

La Figure 6 est une vue semblable à la Figure 5, la pince étant desserrée.

Telle qu'elle est représentée au dessin, la pince selon l'invention comprend une plaque de support 1 reliée à un adaptateur 2 par trois tirants 3. La plaque 1 comporte un perçage central 4 dans lequel un vérin 5 disposé verticalement est fixé par un écrou 6, la tige 7 de son piston étant dirigée vers le bas.

Un embout de commande 8 formé d'une embase 9 qui est percée en son centre d'un trou taraudé 10, et de trois bras verticaux 11 est fixé à la tige 7 du vérin, qui est vissée dans le trou 10. Ces bras traversent trois fentes radiales 12 de la plaque de support 1, qui sont disposées à 120° les unes des autres et convergent vers l'axe X-X du vérin, et dans lesquelles les bras 11 peuvent coulisser verticalement. Chaque bras comporte un épaulement 13, en un point intermédiaire de sa longueur ; une bague 14 repose sur les trois épaulements 13 et est fixée aux bras par des vis 15. Cette bague empêche les bras de vibrer.

Les trois bras 11 appartiennent chacun à un parallélogramme articulé disposé dans un plan vertical passant par l'axe X-X. Chacun de ces parallélogrammes comporte, outre le bras 11 correspondant un bras 16 qui est articulé en 17 sur le bras 11, un bras 18 qui est articulé en 19 sur ce bras 11, et est parallèle au bras 16, et un bras 20 qui est articulé en 21 et 22 sur les bras 16 et 18 et est parallèle au bras 11. Les bras 20 traversent les fentes 12 de la plaque 1 et portent chacun quatre galets 23 qui peuvent rouler sur des pistes de la plaque 1 parallèles aux fentes 12 et sont disposées deux d'un côté de la plaque et deux du côté opposé.

On voit ainsi que lorsque la tige 7 du piston du vérin 5 se déplace verticalement en entraînant les bras 11, les bras 20 se déplacent horizontalement en restant parallèles à eux-mêmes.

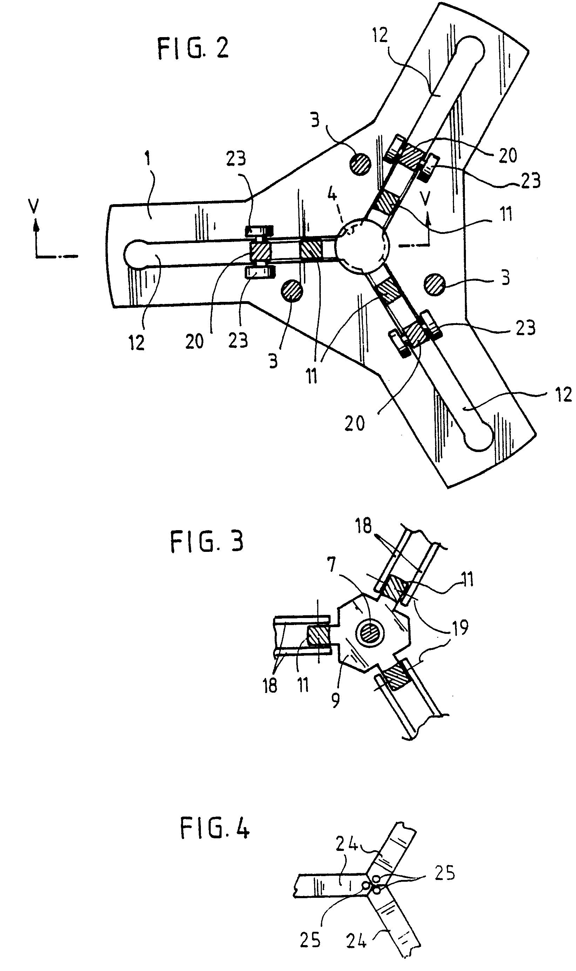

Chaque bras 20 est prolongé à sa partie inférieure par un bras horizontal 24 dont l'extrémité est taillée en biseau à 120° de manière que les positions des trois bras 24 puissent se rejoindre sur l'axe X-X du vérin 6 (voir Figure 4). Au voisinage de cette extrémité, le bras porte un doigt vertical 25 constitué par exemple par une tige cylindrique emmanchée à force dans une chape du bras.

Lorsqu'on actionne le vérin 5 de façon à déplacer son piston vers le haut, les pointes des trois bras 24 tendent à se rejoindre et les trois doigts 25 se resserrent en permettant de saisir une pièce extérieurement circulaire.

Inversement lorsqu'on actionne le vérin 5 de façon que son piston se déplace vers le bas depuis la position extrême haute, les doigts 25 s'écartent et permettent ainsi de saisir une pièce comportant un alésage circulaire.

### Revendications

1. Pince adaptable sur un robot et propre à saisir des pièces circulaires ou comportant un alésage circulaire, comportant un support (1), des parallélogrammes articulés (11, 16, 20, 18) qui sont disposés dans des plans convergeant vers un axe X-X et dont un premier bras (11) est mobile par rapport au support, parallèlement à cet axe X-X, le bras opposé (20) étant mobile dans une direction perpendiculaire audit axe, mais fixe dans la direction de ce dernier, et portant un doigt de serrage (25), et des moyens (5) portés par le support (1) pour déplacer les premiers bras (11) des parallélogrammes, caractérisée en ce que les bras (20) des parallélogrammes portant les doigts de serrage (25) sont munis d'au moins deux galets (23) disposés de part et d'autre du support (1), au contact de pistes prévues sur celui-ci.

2. Pince selon la revendication 1, caractérisée en ce que les premiers bras (11) des parallélogrammes et les bras opposés (20) portant des doigts de serrage (25) sont engagés dans des fentes (12) du support orientées vers l'axe de convergence X-X des parallélogrammes.

3. Pince selon la revendication 1 ou 2, caractérisée en ce que les premiers bras (11) des parallélogrammes sont solidaires d'un même embout de commande (8) relié au support (1) par un vérin (5) disposé dans l'axe de convergence X-X des parallélogrammes, ou par tout autre moyen de translation.

4. Pince selon l'une des revendications précédentes, caractérisée en ce que les extrémités des bras des parallélogrammes (24) portant les doigts de serrage (25) sont taillées en biseau de façon à pouvoir se rejoindre sur l'axe de convergence X-X des parallélogrammes.

### Claims

1. Gripping means for fitting on a robot and adapted for gripping circular work pieces or having a circular bore, comprising a support (1), hinged parallelograms (11, 16, 20, 18) which are disposed in planes converging towards an axis X-X and a first arm (11) of which is movable with respect to the support, parallel to this axis X-X, the opposite arm (20) being movable in a direction perpendicular to said axis, but fixed in the direction of this latter, and including a clamping finger (25), and means (5) carried by the support (1) for moving the first arms (11) of the parallelograms, characterized in that the arms (20) of the parallelograms carrying the clamping fingers (25) are provided with at least two rollers (23) disposed on each side of the support (1), in contact with tracks provided theron.

2. Gripping means according to claim 1, characterized in that the first arms (11) of the parallelograms and the opposite arms (20) carrying clamping fingers (25) are engaged in slits (12) in the support oriented towards the axis of convergence X-X of the parallelograms.

3. Gripping means according to claim 1 or 2, characterized in that the first arms (11) of the parallelogram are firmly fixed to the same control end piece (8) connected to the support (1) by a jack (5) disposed in the axis of convergence X-X of the parallelograms, or by any other translation means.

4. Gripping means according to one of the preceding claims, characterized in that the ends of the arms of the parallelograms (24) carrying the clamping fingers (25) are chamfered so as to be able to meet on the axis of convergence X-X of the parallelograms.

### Patentansprüche

1. An einen Roboter anpaßbare Zange zum Ergreifen von kreisförmigen oder eine kreisförmige Bohrung aufweisenden Werkstücken, mit einem Support (1), gelenkigen Parallelogrammen (11, 16, 20, 18), die in gegen eine Achse X-X konvergierenden Ebenen angeordnet sind und bei denen ein erster Arm (11) in Bezug auf den Support parallel zur Achse X-X beweglich ist, während der gegenüberliegende Arm (20) in einer Richtung senkrecht zu besagter Achse beweglich, aber in Richtung dieser Achse fest angeordnet ist und einen Haltefinger (25) trägt und mit am Support (1) angeordneten Mitteln (5) zur Verschiebung der ersten Arme (11) der Parallelogramme, dadurch gekennzeichnet, daß die Arme (20) der Parallelogramme, welche die Haltefinger (25) tragen mit mindestens zwei Rollen (23) versehen sind, die zu beiden Seiten des Supports (1) und im Kontakt mit auf dem Support vorgesehenen Rollbahnen angeordnet sind.

2. Zange nach Anspruch 1, dadurch gekennzeichnet, daß die ersten Arme (11) der Parallelogramme und die gegenüberliegenden, die Haltefinger (25) tragenden Arme (20) in auf die Konvergenzachse X-X der Parallelogramme hin ausgerichteten Schlitzen (12) des Supports (1) geführt sind.

3. Zange nach Anspruch 1 oder 2, dadurch gekennzeichnet, daß die ersten Arme (11) der Parallelogramme kraftschlüssig mit einer gemeinsamen Steuerzwinge (8) verbunden sind, die über einen Kolben-Zylinderantrieb (5), der in der Konvergenzachse X-X angeordnet ist, oder über anderes Verschiebungsmittel mit dem Support verbunden ist.

4. Zange nach einem der vorhergehenden Ansprüche, dadurch gekennzeichnet, daß die äußeren Enden (24) der Arme der Parallelogramme, welche die Haltefinger (25) tragen, derart mit Abschrägungen versehen sind, daß sie sich auf der Konvergenzachse X-X der Parallelogramme zusammenfügen können.

FIG. 1

FIG. 2

FIG. 3

FIG. 4

FIG. 6

FIG. 5